# EUROPEAN PATENT APPLICATION

(11) **EP 4 385 309 A1**
(43) Date of publication of application: **19.06.2024**
(21) Application number: 22213027.0
(22) Date of filing: 13.12.2022
(51) Int. Cl.: A01D 61/00, A01D 69/00

(54) **AUGER DRIVE ARRANGEMENT**

(71) Applicant: CNH Industrial Belgium N.V., 8210 Zedelgem (BE)
(72) Inventor: Blancke, Jeffrey, 8720 Markegem (BE); Beelaert, Simon, 9991 Adegem (BE); Van Belleghem, Stijn, 9990 Maldegem (BE)
(74) Representative: CNH Industrial IP Department

(57) **Abstract**

A pickup assembly (2) for an agricultural harvester (1). The pickup assembly (2) has a feeding auger (11) rotatably mounted to a frame (200) of the pickup assembly (2). The feeding auger (11) has a longitudinally extending axis of rotation (301). A drive unit (400) is operatively connected to the feeding auger (11) to rotate the feeding auger (11) about the longitudinally extending axis of rotation (301). The drive unit (400) is connected to the feeding auger (11) via a drive shaft (304) and a flexible coupling (310).

## Description

### TECHNICAL FIELD

The present invention relates to a pickup assembly for an agricultural harvester, the pickup assembly comprising a pickup assembly frame, a feeding auger rotatably coupled to the pickup assembly frame, and a drive unit configured to rotate the feeding auger. The present invention further relates to an agricultural harvester comprising such a pickup assembly.

### BACKGROUND

Certain agricultural machines, such as forage harvesters, forage wagons and balers, collect crop material that has been cut from the field. The cut crop material is typically left in rows, also called swaths, on the field to dry before being picked-up sometime later by a forage harvester or similar.

The component of the agricultural machine which gathers the crop material and feeds it further into the machine for processing is generally known as a pickup assembly. A pickup assembly comprises a pickup unit, typically in the form of a pickup drum rotatably mounted on the pickup assembly frame. The pickup drum has radially arranged projecting tines to collect the crop material and propel it upwards, past a guiding element, and then into a feeding auger that moves the crop laterally towards a feed channel through which the crop material is conveyed into the machine for subsequent processing. Such subsequent processing may, for example, involve baling, threshing, chopping, storing and/or depositing.

The row of cut crop material typically has a variable height from one side of the row to the other. For example, the row of cut crop material may be higher on one side than on the other, or may be highest towards the middle of the row. Also, the peak of the swath may not be taken in at the centre of the pickup unit. The varying height of the cut crop material along the width of the pickup unit results in a varying volume of the cut crop material that is fed to the feeding auger by the pickup drum via the guiding element. The feeding auger is typically suspended from the frame by two independently pivotable auger arms connecting to the respective outer ends of the feeding auger. Consequently, an asymmetrically presented crop volume entering the pickup unit may cause the feeding auger to tilt relative to the pickup frame.

The feeding auger is typically driven by a drive pulley, chain, or belt connected to a drive shaft at one or both ends of the auger. As the auger tilts in use, the axis of rotation of the drive pully and the axis of rotation of the drive shaft become angularly offset from one another. This causes undesirable stress and wear on the auger drive mechanism and may cause drive belts to risk running off their respective pulleys.

It is against this background that the present invention has been developed.

### SUMMARY OF THE INVENTION

According to an aspect of the invention there is provided a pickup assembly for an agricultural harvester, the pickup assembly comprising: a pickup assembly frame; a feeding auger rotatably mounted to the pickup assembly frame, wherein the feeding auger has a longitudinally extending axis of rotation; and a drive unit operatively connected to the feeding auger to rotate the feeding auger about the longitudinally extending axis of rotation, wherein the drive unit is connected to the feeding auger via a drive shaft and a flexible coupling.

The pickup assembly of the present invention is advantageous as the orientation of the drive unit remains unaffected when the feeding auger tilts in use as a result of uneven crop presentation. Stress and wear on the auger drive mechanism is thereby reduced and there is less risk of drive belts running off their pulleys.

Optionally the flexible coupling is at least partially located within the feeding auger. This is advantageous as the flexible coupling may be better protected from dirt and debris which may interfere with its proper functioning.

The drive shaft or the flexible coupling is optionally connected to the feeding auger via a drive transmission member which extends radially away from the axis of rotation of the feeding auger to facilitate transmission of drive from the drive unit to the feeding auger.

The drive transmission member may be permanently fixed to the feeding auger to provide a robust drive connection.

In one example, the flexible coupling may comprise a universal joint which is a readily available and robust flexible connection.

Optionally the drive unit comprises a drive pulley to facilitate transmission of drive to the driveshaft.

The drive unit is optionally attached to the pickup assembly frame which provides a convenient mounting for the drive unit.

The feeding auger may be mounted to the pickup assembly frame by pivotable arms to facilitate tilt of the feeding auger in use.

According to another aspect of the invention there is provided an agricultural harvester comprising the pickup assembly described above.

### BRIEF DESCRIPTION OF THE DRAWINGS

Embodiments of the invention will now be described by way of example with reference to the accompanying drawings, in which:
Figure 1 schematically shows a forage harvester with a pickup assembly that may embody one or more of the inventions described herein;
Figure 2 shows a perspective front view of a pickup assembly that may be used with the forage harvester of Figure 1;
Figure 3 shows a perspective rear view of the pickup assembly of Figure 2;
Figure 4 shows a cross-section of the pickup assembly of Figures 2 and 3; and
Figure 5 shows a cross-section view of a feeding auger attached to a pick-up frame.

### DETAILED DESCRIPTION

In the following, a pickup assembly is described in which the above described invention may be advantageously used. In addition to the invention claimed in the appended claims, further improvements may be implemented in the same pickup assembly. It is noted that, while some features of these other improvements may appear essential in the context of those other improvements, it should not be concluded therefrom that such features are essential to the now claimed invention too. Similarly, it may be suggested that a feature essential for the currently claimed invention is merely optional in the context of the other possible improvements, which is not to be interpreted as an attempt to broaden the scope of protection beyond that what is claimed in the appended claims.

The directions up, down, forward, and rearward are herein defined relative to the general orientation and direction of an agricultural harvester and its attached pickup assembly driving over a field and picking up crop.

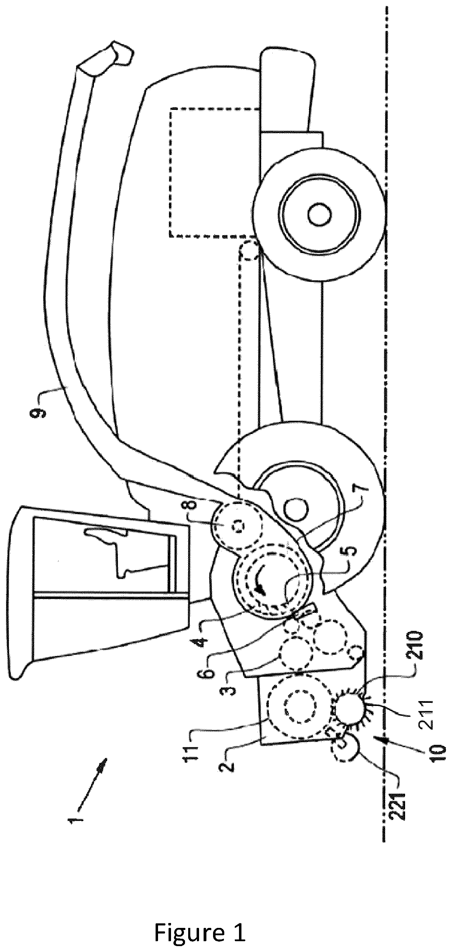

Figure 1 shows a schematic side view of an exemplary embodiment of an agricultural vehicle, illustrated in the form of a forage harvester 1. As the harvester 1 advances through a field, crops, e.g. grass or alfalfa, are gathered by a pickup assembly 2 and transported to a central crop inlet of the forage harvester 1 where they enter the harvester 1 through a set of feed rolls 3. The feed rolls 3 guide the crops in the form of a mat with a given thickness towards the cutting drum 4, which rotates in the direction indicated by the arrow, about a rotation axis that is transversal to the direction of movement of the crops. Knives 5 are mounted on and distributed along the full circumference of the drum 4, so that the knives 5 pass by a stationary shear bar 6 as the drum 4 rotates, thereby chopping the crops into small pieces which are further transported between the cutting drum 4 and a concave 7. The chopped material is then ejected by a blower 8 through a spout 9. It should be appreciated that while the agricultural vehicle is illustrated and described as a forage harvester 1, in some embodiments the pickup assembly may be used in combination with other agricultural vehicles such as a grass wagon, a combine harvester, or a baler, e.g., a large square baler, a small square baler, or a round baler.

The pickup assembly 2 comprises a pickup unit 10 that includes a pickup drum 210 that carries a plurality of tines 211. The pickup drum 210 is configured to rotate about a pickup axis that is transverse to the direction of movement of the harvester 1. The rotating tines 211 pick the crop material up from the ground and move it toward a crop material conveyor in the form of a feeding auger 11. The feeding auger 11 conveys the picked up crop material toward an inlet of the harvester 1, or to a central location where a separate conveyor conveys the crop material toward the interior of the harvester 1.

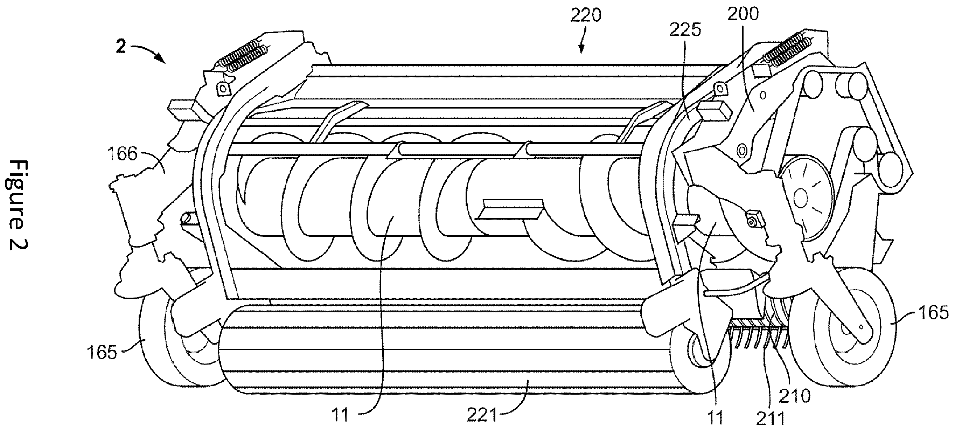

Figures 2 to 4 show various aspects of the pickup assembly 2 in further detail. The pickup assembly also includes a wind guard assembly 220. The wind guard assembly 220 may include a cylindrical roller 221, which defines a roller axis about which the roller 221 rotates during operation. Like the pickup axis, the roller axis is generally transverse to the direction of movement of the harvester 1. It should be appreciated that while the roller 221 is illustrated and described as a cylindrical roller 221, the roller 221 can be formed to have other shapes. The roller 221 may be a fixed roller, i.e., a roller that generally maintains a fixed position of the roller axis during operation, or an adjustable roller, i.e., a roller that can be appreciably re-positioned so the roller axis moves to accommodate for variations swath height.

Other wind guard assemblies may, for example, have two rollers to guide crop material towards the crop material conveyor. In such wind guard assemblies, a front roller rolls on top of the swath of crop material as it is being collected while a rear roller is positioned above the tines 211 to guide the crop material toward the crop material conveyor 11 when it is picked up.

The pickup drum 210, feeding auger 11, and wind guard assembly 220 are all carried by a frame 200 of the pickup assembly 2, as may other functional parts of the pickup assembly 2. Typically, the pickup assembly 2 is provided as a separate header that can be mounted to the front of the harvester 1 when needed. Alternatively, the pickup assembly 2 is fixedly attached to a chassis of the forage harvester 1.

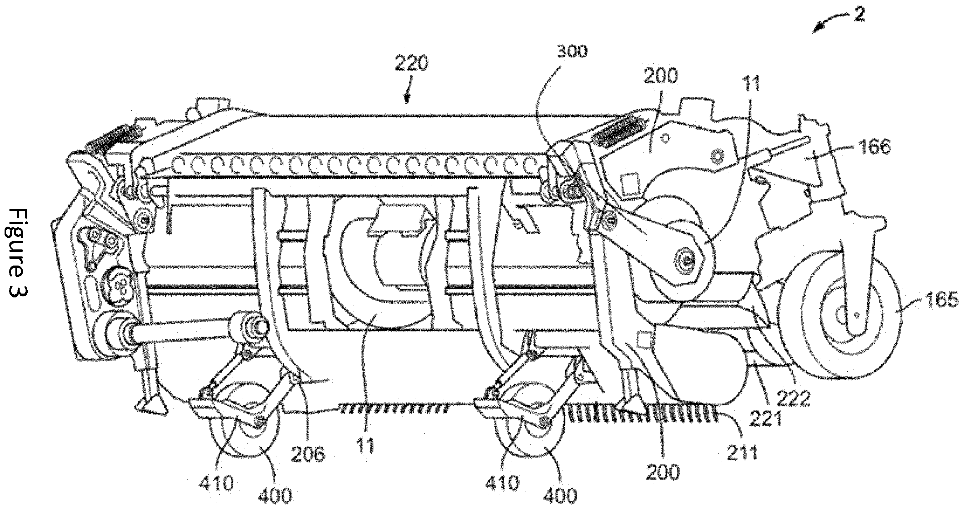

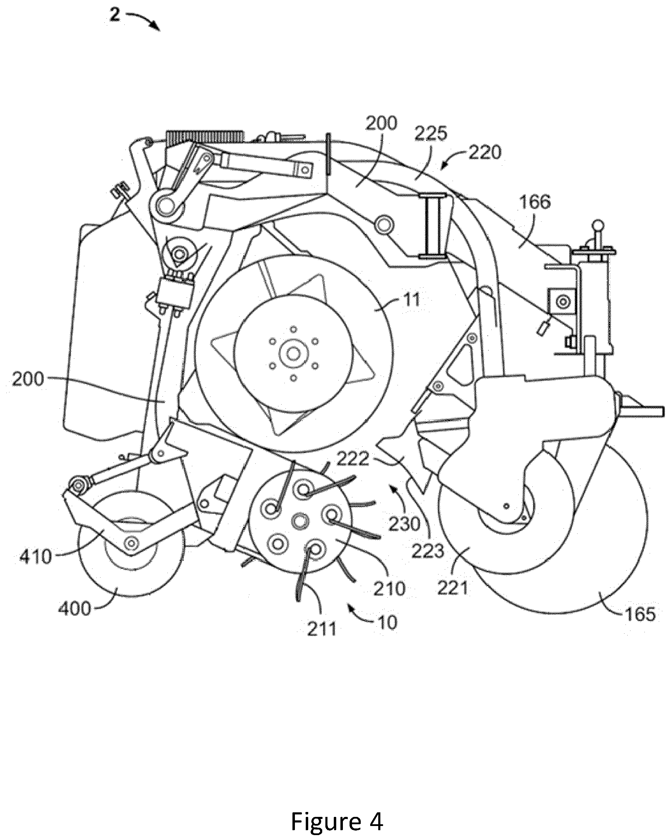

Figure 4 shows a cross section of the pickup assembly 2 of Figures 2 and 3. As the earlier Figures, Figure 4 shows the wind guard roller 221 of the wind guard assembly 220, the pickup drum 210 with its plurality of tines 211, and the feeding auger 11. The wind guard roller 221 is followed by a guidance plate 222. An infeed channel 230 is formed between the wind guard roller 221 and an infeed channel surface 223 of the guidance plate 222 on one side and the pickup drum 210 with its tines 211 on the other side. The geometry of the infeed channel 230 may be adjusted by raising and lowering the wind guard assembly 220, by pivoting or otherwise moving the guidance plate 222 relative to the wind guard frame 225, or by moving the pickup drum 210 relative to the pickup assembly frame 200.

A pair of height adjustable gauge wheels 165 are attached to the pickup assembly frame 200 by gauge wheel arms 166, pivotably supported at respective lateral ends of the pickup assembly frame 200. A pair of height adjustable support wheels 400 are attached to the pickup assembly frame 200 by support wheel arms 410, pivotably supported proximate respective lateral ends of the pickup assembly frame 200.

During operation of the forage harvester 1 collecting crop from a field, the pickup assembly 200 is supported in an operational position such that the gauge wheels 165 and support wheels 400 contact the ground. The running height of the pickup unit 10 can be adjusted by adjusting the relative position of the gauge wheels 165 with respect to the pickup assembly frame 200 by pivoting the gauge wheel arms 166 in relation to the pickup assembly frame 200. The running height of the pickup unit 10 can also be adjusted by adjusting the relative position of the support wheels 400 with respect to the pickup assembly frame 200 by pivoting the support wheel arms 410 in relation to the pickup assembly frame 200.

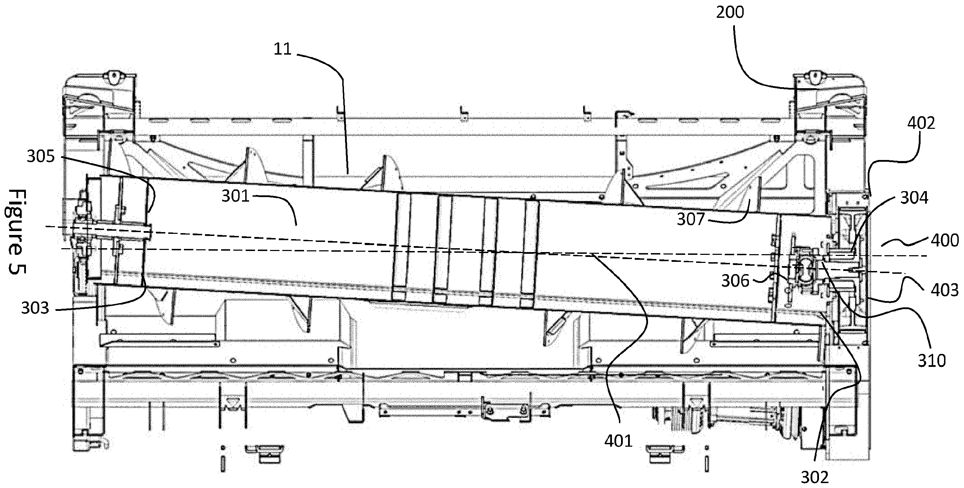

As best shown in Figure 3, the feeding auger 11 is suspended from the frame 200 by two independently pivotable auger arms 300 connected to respective outer ends of the feeding auger 11. The auger arms 300 are able to pivot with respect to the frame 200 independently of one another so that the outer ends 302, 303 (see Figure 5) of the feeding auger 11 may be at different heights with respect the running height of the pickup unit 10. Consequently, the longitudinally extending axis of rotation 301 of the feeding auger 11 may be tilted with respect to the frame 200. As discussed above, asymmetrically presented crop volume entering the pickup unit 10 may cause the feeding auger to tilt in this way.

Figure 5 shows a cross-section view of the feeding auger 11 rotatably mounted to the pick-up frame 200 via the auger arms 300 (not shown in Figure 5). A drive unit 400 is mounted to the auger arm 300 proximate a first end 302 of the feeding auger 11. The drive unit 400 comprises a drive belt 402 which is driven in use by a pulley attached to a drive motor (not shown) which is attached to the pick-up frame 200. The drive belt 402 is configured to drive a drive shaft 304 via a pulley 403. The drive unit 400 has an axis of rotation 401 about which the pulley 403 and the drive shaft 304 rotate in use. Although a drive belt is depicted and described, it will be understood that a drive chain may be used in place of a drive belt.

The drive shaft 304 extends from the pulley 403 towards a drive transmission member 306 which extends radially from the longitudinal axis of rotation 301 of the feeding auger 11 to the internal surface 307 of the feeding auger 11. In the example shown in Figure 5, the drive transmission member 306 is a circular plate having a central attachment point for attaching to one end of the drive assembly. However, in other examples, the drive transmission member 306 may be a spider having a central attachment point and a plurality of arms which extend from the central attachment point to the inner surface 307 of the feeding auger 11.

The drive shaft 304 is connected to the drive transmission member 306 via a flexible coupling 310. In the example shown in Figure 5, the flexible coupling 310 is a universal joint. However, in other examples, the flexible coupling could be any other suitable type of flexible coupling including but not limited to a constant velocity joint.

The second end 303 of the feeding auger 11 is supported for rotation by a stub shaft 305. The connection between the stub shaft 305 and the feeding auger 11 and/or the auger arm 300 may optionally be made via flexible coupling to compensate for tilt of the feeding auger 11 in use.

During use, if an asymmetric presentation of crop material causes the axis of rotation 301 of the feeding auger 11 to tilt with respect to the axis of rotation 401 of the drive unit 400, the flexible coupling 310 articulates as it turns such that drive is transmitted from the drive unit 400 to the feeding auger 11 without the drive unit 400, or pulley 403, being caused to tilt. This is beneficial as the drive belt 402 is able to remain in line with the pulley 403 resulting in less stress and wear on the auger drive mechanism and less risk of the drive belt 402 running off the pulley 403.

It will be understood that the example described above and illustrated in Figure 5 is one example only and that other configurations are possible. For example, the drive shaft 304 may not extend into the interior of the feeding auger 11. Rather, the drive shaft 304 may connect to the outermost end of the feeding auger 11. In another alternative example, the flexible coupling may be located anywhere along the drive shaft 304 or may be located between the drive shaft 304 and the pulley 403. More than one flexible coupling may be used. For example, a flexible coupling may be located at both ends of the drive shaft 304.

In another example, a second drive unit may be mounted to the auger arm 300 proximate the second end 303 of the feeding auger 11. Any of the arrangements described above may be used to connect the second drive unit to the second end 303 of the feeding auger 11.

## Claims

1. A pickup assembly (2) for an agricultural harvester (1), the pickup assembly (2) comprising:
a pickup assembly frame (200);
a feeding auger (11) rotatably mounted to the pickup assembly frame (200), wherein the feeding auger (11) has a longitudinally extending axis of rotation (301); and
a drive unit (400) operatively connected to the feeding auger (11) to rotate the feeding auger (11) about the longitudinally extending axis of rotation (301), wherein the drive unit (400) is connected to the feeding auger (11) via a drive shaft (304) and a flexible coupling (310).

2. A pickup assembly (2) as claimed in claim 1, wherein the flexible coupling (310) is at least partially located within the feeding auger (11).

3. A pickup assembly (2) as claimed in claim 1 or 2, wherein the drive shaft (304) or the flexible coupling (310) is connected to the feeding auger (11) via a drive transmission member (306) which extends radially away from the axis of rotation (301) of the feeding auger (11).

4. A pickup assembly (2) as claimed in claim 3, wherein the drive transmission member (306) is permanently fixed to the feeding auger (11).

5. A pickup assembly (2) as claimed in any preceding claim, wherein the flexible coupling (310) comprises a universal joint.

6. A pickup assembly (2) as claimed in any preceding claim, wherein the drive unit (400) comprises a drive pulley (403).

7. A pickup assembly (2) as claimed in any preceding claim, wherein the drive unit (400) is attached to the pickup assembly frame (200).

8. A pickup assembly (2) as claimed in any preceding claim, wherein the feeding auger (11) is mounted to the pickup assembly frame (200) by pivotable arms (300).

9. An agricultural harvester (1) comprising a pickup assembly (2) as claimed in any of the preceding claims.
